Europäisches Patentamt

European Patent Office

Office européen des brevets

(19)

(11) Veröffentlichungsnummer: **0 307 707**
B1

(12) **EUROPÄISCHE PATENTSCHRIFT**

(45) Veröffentlichungstag der Patentschrift:
31.10.90

(21) Anmeldenummer: 88114073.5

(22) Anmeldetag: 29.08.88

(51) Int. Cl.⁵: **H02K 5/22**

(54) Befestigung für ein aussen an einem Motorgehäuse zu halterndes Bauelement.

(30) Priorität: 10.09.87 DE 3730457

(43) Veröffentlichungstag der Anmeldung:
22.03.89 Patentblatt 89/12

(45) Bekanntmachung des Hinweises auf die Patenterteilung:
31.10.90 Patentblatt 90/44

(84) Benannte Vertragsstaaten:
DE FR GB IT SE

(56) Entgegenhaltungen:
FR-A- 2 375 745
FR-A- 2 505 572
FR-A- 2 511 135
GB-A- 2 079 540
US-A- 4 390 219

(73) Patentinhaber: Siemens Aktiengesellschaft,
Wittelsbacherplatz 2, D-8000 München 2(DE)

(72) Erfinder: Seuffert, Werner, Mainstrasse 9,
D-8722 Bergrheinfeld(DE)
Erfinder: Müller, Hans-Joachim, Dipl.-Ing. FH,
Schweinfurter Strasse 80, D-8722 Bergrheinfeld(DE)

## Beschreibung

Die Erfindung bezieht sich auf eine Befestigung für ein außen an einem Motorgehäuse zu halterndes Bauelement, insbesondere Relais; ein derartiger Motor ist durch eine offenkundige Vorbenutzung bekannt.

Bei der durch die offenkundige Vorbenutzung bekannten Befestigung ist als elektrisches Bauelement ein Schaltkasten außen an einem angegossenen Gehäusestützpunkt des Motorgehäuses angeschraubt.

Durch die FR-A 2 511 135 bzw. die korrespondierende DE-A1 32 26 174 ist es bekannt, eine elektrische Versorgungs- und Schutzeinheit außen am Gehäuse eines Kompressors dadurch zu befestigen, daß ein die elektrischen Bauteile der Schutzeinheit aufnehmender isolierender Tragkörper in eine umgebende, vom Gehäuse des Kompressors getragene Behälterwand (Anspruch 12) eingesetzt wird; die Behälterwand wird anschließend durch einen Deckel dadurch fest verschlossen, daß ein auf den Deckel aufgedrücktes C-förmiges Federband diesen umgreift und mit seinen abgebogenen Schenkelenden mit Öffnungen in der Behälterwand in Eingriff bringbar ist (Anspruch 13).

Gemäß vorliegender Erfindung soll bei einfacher, insbesondere automatengerechter Fertigung und Montage ein Maximum an Flexibilität hinsichtlich der Anbringung des Bauelementes relativ zum Motorgehäuse bei einem Minimum von dazu notwendigen unterschiedlichen Bauteilen gewährleistet werden können.

Die Lösung dieser Aufgabe gelingt bei einer Befestigung der eingangs genannten Art erfindungsgemäß durch die Lehre des Anspruchs 1; vorteilhafte Ausgestaltungen der Erfindung sind jeweils Gegenstand der Unteransprüche.

Die erfindungsgemäße Bauteilbefestigung erlaubt im Baukastensystem mit z.B. einem einzigen Grundmotor eine unterschiedliche tangentiale oder axiale Anbringung z.B. eines Relais am Motorgehäuse lediglich durch tangentiales bzw. axiales Verschieben bzw. einen unterschiedlichen radialen Abstand des Relais zum Motorgehäuse durch Austauschen der Traverse, wobei durch eine einfache Schnappverbindung ohne Notwendigkeit eines Schraubvorganges und eines in jedem Einzelfall gesonderten Gehäuses mit spezifisch angegossenem Gehäusestützpunkt das Bauelement einerseits und die Feder-Schelle andererseits unter Umgreifung des Motorgehäuses gegeneinander und gegen das Motorgehäuse festspannbar sind.

Vorteilhafterweise werden das Bauteil- bzw. das Relaisgehäuse zusammen mit der Traverse als einteiliges Spritzguß- bzw. Druckgußbauteil hergestellt. Eine besonders automaten- bzw. montagefreundliche gegenseitige Verspannung von Feder-Schelle, Bauelement und Traverse am Motorgehäuse ist dadurch erzielbar, daß die freien Schenkelenden der das Motorgehäuse umfassenden Feder-Schelle unter Federzug formschlüssig in korrespondierende Aufnahmen des Bauelementes eingreifen. Um dabei gleichzeitig ein axiales gegenseitiges Verschieben der Traverse einerseits und der Feder-Schelle andererseits auch bei größeren Stoßbelastungen verhindern zu können, ist in vorteilhafter Weise vorgesehen, daß die Traverse mit Ausklinkungen versehen ist, in die im Sinne einer axialen Lagefixierung zwischen dem Aufnahmeblock und der Feder-Schelle die Klemm-Bügel der Feder-Schelle eingreifen.

Um auch in tangentialer Hinsicht eine zusätzliche formschlüssige Lagefixierung auf einfache Weise erzielen zu können, ist weiterhin vorgesehen, daß im Sinne einer formschlüssigen Lage-Fixierung des Bauelementes bzw. der Traverse relativ zum Motorgehäuse die Traverse mit zumindest einem radialen Fixier-Nocken oder einer radialen Fixier-Vertiefung versehen ist, denen am Motorgehäuse zumindest eine korrespondierende radiale Fixier-Vertiefung oder ein radialer Fixier-Nocken entsprechen und im Sinne eines für verschiedene Befestigungslagen einsetzbaren Universal-Motorgehäuses in vorteilhafter Weise das Motorgehäuse mit mehreren, durch Zahl und Position den unterschiedlichen Lagen des Aufnahmeblocks entsprechenden Vertiefungen bzw. Nocken versehen sind. In ähnlicher Weise kann auch die Feder-Schelle, insbesondere bei formschlüssiger Verrastung und Einklinkung an der Traverse, zur tangentialen formschlüssigen Lagesicherung dadurch mitbenutzt werden, daß sie mit zumindest einem radialen Fixier-Nocken oder einer Fixier-Öffnung und das Motorgehäuse mit einer korrespondierenden radialen Fixier-Vertiefung oder einem radialen Fixier-Nocken versehen sind. Die radialen Vertiefungen lassen sich bei der Herstellung des Motorgehäuses bzw. der Feder-Schelle z.B. durch einen einfachen Prägevorgang herstellen.

Die Erfindung sowie weitere vorteilhafte Ausgestaltungen der Erfindung werden im folgenden anhand eines schematisch in der Zeichnung dargestellten Ausführungsbeispieles näher erläutert; darin zeigen:

FIG 1 eine axiale Draufsicht auf eine erfindungsgemäße Relaisbefestigung;

FIG 2 die Relaisbefestigung gemäß FIG 1 in Ansicht II;

FIG 3 im Detailausschnitt eine tangentiale Lagefixierung zwischen der Federschelle und dem Motorgehäuse durch einen in eine Vertiefung des Motorgehäuses eingreifenden Fixier-Nocken der Feder-Schelle;

FIG 4 den Ausschnitt gemäß FIG 3 in Ansicht IV;

FIG 5 im Detailausschnitt eine tangentiale Lagesicherung zwischen der Feder-Schelle und dem Motorgehäuse durch in eine Fixier-Öffnung der Feder-Schelle eingreifenden radial vorstehenden Fixier-Nocken des Motorgehäuses;

FIG 6 den Ausschnitt gemäß FIG 5 in Ansicht VI.

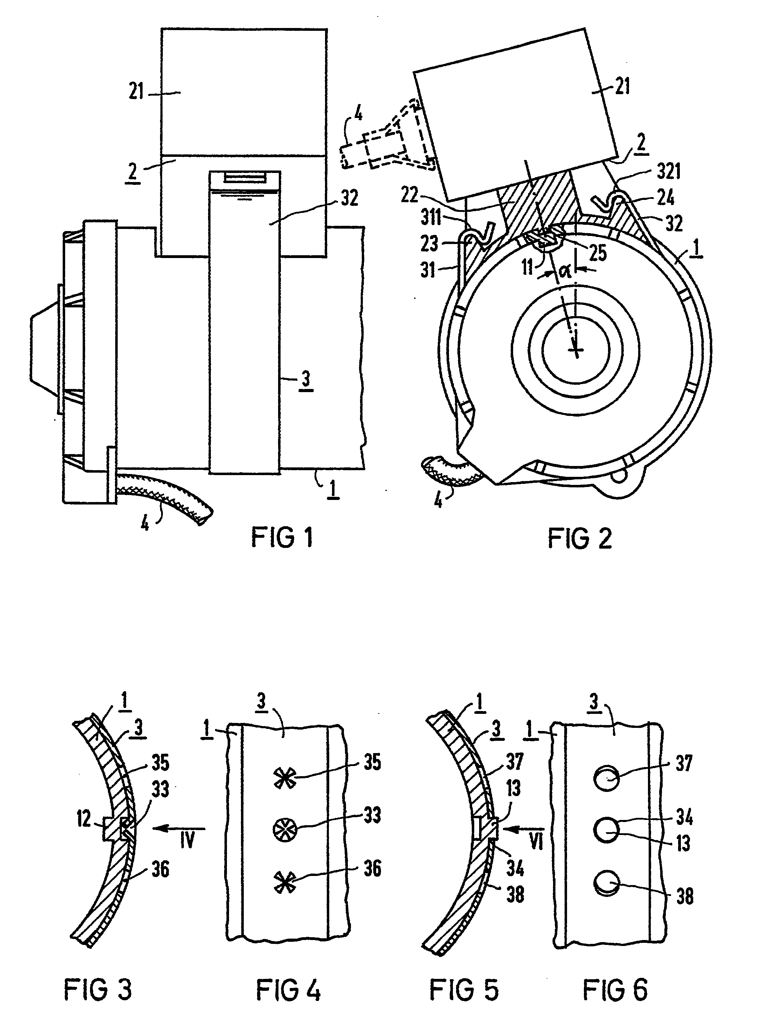

FIG 1, 2 zeigen ein Motorgehäuse 1, an dem in einer von der Senkrechten um den Winkel α abweichenden Aufhängungsebene ein Relais als Bauelement 2 mit einem Bauelementgehäuse 21, das über eine Traverse 22 mittels einer das Motorgehäuse 1 in der unteren Hälfte umgreifenden Feder-Schelle 3 dadurch gegen das Motorgehäuse 1 fest angedrückt ist, daß die Feder-Schelle 3 mit endseitig an ihren Schenkelenden 31, 32 angeformten Klemm-

Bügeln 311, 321 hinter Klemm-Nocken 23, 24 der Traverse 22 eingreift. Die Traverse 22 ist mit mittigen endseitig geöffneten Ausklinkungen versehen, in welche die Klemmbügel 311, 321 formschlüssig eingreifen. Aus dem Bauelementgehäuse 21 ist feuchtigkeitsdicht ein Anschlußkabel 4 herausgeführt, das im Bereich des linken Lagerdeckels des Motorgehäuses 1 zum Anschluß an die Bürste des hier verwendeten Kollektormotors ebenfalls feuchtigkeitsdicht in das Innere des Motorgehäuses 1 führt.

Zur tangentialen formschlüssigen Lagesicherung zwischen der Traverse 22 und dem Motorgehäuse 1 ist gemäß FIG 1, 2 an der Traverse 22 im Bereich der Auflagefläche zum Motorgehäuse 1 ein radial vorstehender Fixier-Nocken 25 vorgesehen, der in eine korrespondierende radial eingeprägte Fixier-Vertiefung 11 im Motorgehäuse 1 eingreift.

FIG 3, 4 bzw. FIG 5, 6 zeigen zwei weitere Alternativen der tangentialen formschlüssigen Sicherung zwischen der Traverse 22 bzw. der Feder-Schelle 3 einerseits und dem Motorgehäuse 1 andererseits, bei der gemäß FIG 3, 4 ein radial nach innen eingedrückter Fixier-Nocken 33 in eine radial nach innen geprägte Fixier-Vertiefung 12 des Motorgehäuses 1 und gemäß FIG 5, 6 ein radial nach außen stehender Fixier-Nocken 13 des Motorgehäuses 1 in eine eingestanzte Fixier-Öffnung 34 der Feder-Schelle 3 eingreifen.

Wie in FIG 1 im Teilschnittbild anhand eines einzigen eingeprägten Fixier-Nockens 11 gezeigt, ist nach einer Ausgestaltung der Erfindung das Motorgehäuse im Bereich der Anlage der Feder-Schelle 3 über den Umfang verteilt mit weiteren eingeprägten Fixier-Vertiefungen versehen, in die der Fixier-Nocken 25 der Traverse 22 bei anderer Winkelstellung als die des gezeigten Winkels α eingreifen. Entsprechend der anderen Winkelstellung ist dann auch die Feder-Schelle 3 um den entsprechenden tangentialen Winkel aus ihrer Lage gemäß FIG 1 verdreht anzunehmen.

Als Alternative zu dieser einfachen variablen Einstellung des Bauelementgehäuses 21 relativ zum Motorgehäuse 1 ist gemäß FIG 4 bzw. FIG 6 vorgesehen, die Feder-Schelle 3 über den Umfang mit mehreren Fixier-Nocken oder noch einfacher mit mehreren Fixier-Öffnungen zu versehen; dementsprechend sind in vorteilhafter Weise gemäß FIG 4 neben dem belegten Fixier-Nocken 33 noch weitere bereits vorgestanzte, jedoch noch nicht radial einwärts gedrückte Fixier-Nocken 35, 36 bzw. gemäß FIG 6 neben der belegten Fixier-Öffnung 34 noch weitere Fixier-Öffnungen 37, 38 am Umfang der Feder-Schelle 3 vorgesehen.

**Patentansprüche**

1. Befestigung für ein außen an einem Motorgehäuse (1) zu halterndes Bauelement (2), insbesondere Relais, dadurch gekennzeichnet, daß das Bauelement (2) über eine Traverse (22) mittels einer das Motorgehäuse (1) umgreifenden und mit die freien Schenkelenden (31; 32) unter Federzug formschlüssig in korrespondierende Aufnahmen des Bauelementes (2) eingreifenden Feder-Schelle (3) am Motorgehäuse (1) festspannbar ist.

2. Befestigung für ein Bauelement mit einem Bauelementgehäuse nach Anspruch 1, dadurch gekennzeichnet, daß das Bauelementgehäuse (21) und die Traverse (22) ein einteiliges Spritzguß- bzw. Druckgußbauteil bilden.

3. Befestigung nach Anspruch 1 und/oder 2, dadurch gekennzeichnet, daß die freien Schenkelenden (31; 32) der Feder-Schelle (3) mit Klemmbügeln (311; 321) versehen sind, die in korrespondierende Klemm-Nocken (23, 24) an der Traverse (22) eingreifen. (FIG 1, 2)

4. Befestigung nach Anspruch 2 und/oder 3, dadurch gekennzeichnet, daß die Traverse (22) mit Ausklinkungen versehen ist, in die im Sinne einer axialen Lagefixierung zwischen dem Bauelement (2) bzw. der Traverse (22) einerseits und der Feder-Schelle (3) andererseits die Klemm-Bügel (311; 321) der Feder-Schelle (3) eingreifen.

5. Befestigung nach zumindest einem der Ansprüche 1 bis 4, dadurch gekennzeichnet, daß im Sinne einer formschlüssigen Lage-Fixierung des Bauelementes (2) bzw. der Traverse (22) relativ zum Motorgehäuse (1) die Traverse (22) mit zumindest einem radialen Fixier-Nocken (33) oder einer radialen Fixier-Vertiefung versehen ist, denen am Motorgehäuse (1) zumindest eine korrespondierende radiale Fixier-Vertiefung (11) oder ein radialer Fixier-Nocken entspricht. (FIG 1).

6. Befestigung nach zumindest einem der Ansprüche 1 bis 4, dadurch gekennzeichnet, daß im Sinne einer formschlüssigen Lage-Fixierung des Bauelementes (2) bzw. der Traverse (22) relativ zum Motorgehäuse (1) die Feder-Schelle (3) mit zumindest einem radialen Fixier-Nocken (34) oder einer Fixier-Öffnung (35) versehen ist, der am Motorgehäuse (1) zumindest eine korrespondierende radiale Fixier-Vertiefung (12) oder ein radialer Fixier-Nocken (13) entspricht. (FIG 3–6).

7. Befestigung nach zumindest einem der Ansprüche 1 bis 6, dadurch gekennzeichnet, daß im Sinne eines für verschiedene Aufhängungslagen einsetzbaren Universal-Motorgehäuses das Motorgehäuse (1) mit mehreren, durch Zahl und Position den unterschiedlichen Lagen der Traverse (22) entsprechenden Fixier-Vertiefungen bzw. Fixier-Nocken versehen ist.

8. Befestigung nach zumindest einem der Ansprüche 5 oder 6, dadurch gekennzeichnet, daß die Fixier-Vertiefungen bzw. Fixier-Nocken in die Oberfläche des Motorgehäuses eingedrückt bzw. eingeprägt sind sowie die Fixier-Nocken bzw. Fixier-Öffnungen in die Feder-Schelle eingeprägt bzw. eingestanzt sind.

**Revendications**

1. Fixation pour un composant (2), notamment un relais, destiné à être maintenu extérieurement sur le carter (1) d'un moteur, caractérisée par le fait que le composant (2) peut être fixé par serrage sur le carter (1) du moteur par l'intermédiaire d'une traverse (22) et au moyen d'un collier de serrage formant ressort (3), qui entoure le carter (1) du moteur et s'engage par les extrémités libres (31; 22) de ses branches, moyennant l'application d'une traction du ressort, selon une liaison par formes complémentaires, dans des évidements correspondants du composant (2).

2. Fixation pour un composant comportant un boîtier suivant la revendication 1, caractérisé par le fait que le boîtier (22) du composant et la traverse (22) sont réalisés sous la forme d'une pièce monobloc moulée par injection ou coulée sous pression.

3. Fixation suivant la revendication 1 et/ou 2, caractérisée par le fait que les extrémités libres (31; 32) des branches du collier de serrage formant ressort (30) comportent des étriers de blocage (311; 321), qui s'engagent dans des cames correspondantes de blocage (23, 24) ménagées sur la traverse (22). (Figures 1, 2).

4. Fixation suivant la revendication 2 et/ou 3, caractérisée par le fait que la traverse (22) comporte des encoches, dans lesquelles les étriers de blocage (311; 321) du collier de serrage formant ressort (33) s'engagent dans le sens d'une fixation axiale en position entre le composant (2) et la traverse (22), d'une part, et le collier de serrage formant ressort (3), d'autre part.

5. Fixation suivant au moins l'une des revendications 1 à 4, caractérisée par le fait qu'en vue de l'obtention d'une fixation en position, selon une liaison par formes complémentaires, du composant (2) et de la traverse (22) par rapport au carter (1) du moteur, la traverse (22) comporte au moins une came radiale de fixation (33) ou un renfoncement radial de fixation, à laquelle ou auquel correspond, sur le carter (1) du moteur, au moins un renfoncement radial correspondant de fixation (11) ou une came radiale de fixation (figure 1).

6. Fixation suivant au moins l'une des revendications 1 à 4, caractérisée par le fait qu'en vue de l'obtention d'une fixation en position, selon une liaison par formes complémentaires, du composant (2) ou de la traverse (22) par rapport au carter (1) du moteur, le collier de serrage formant ressort (3) comporte au moins une came radiale de fixation (34) ou une ouverture de fixation (35), à laquelle correspond, sur le carter (1) du moteur, au moins un renfoncement radial correspondant de fixation (12) ou une came radiale de fixation (13). (Figures 3–6).

7. Fixation suivant au moins l'une des revendications 1 à 6, caractérisée par le fait que pour l'obtention d'un carter de moteur universel, utilisable pour différentes positions de suspension, le carter (1) du moteur comporte plusieurs renfoncements de fixation ou cames de fixation, dont le nombre et la position correspondent aux différentes positions de la traverse (22).

8. Fixation suivant au moins l'une des revendications 5 ou 6, caractérisée par le fait que les renfoncements de fixation ou les cames de fixation sont formées par enfoncement ou gaufrage dans la surface du carter du moteur et que les cames de fixation ou les ouvertures de fixation sont formées par gaufrage ou découpage dans un collier de serrage formant ressort.

## Claims

1. A fastening for a component (2) to be held on the outside of a motor housing (1), in particular a relay, characterised in that the component (2) is able to be clamped on the motor housing (1), by way of a cross-member (22) by means of a spring clip (3) embracing the motor housing (1) and engaging with its free shank ends (31; 32), with spring tension, in a positive-locking manner, in corresponding recesses of the component (2).

2. A fastening for a component with a component housing according to claim 1, characterised in that the component housing (21) and the cross-member (22) form a one-part injection moulding or die-casting component.

3. A fastening according to claims 1 and/or 2, characterised in that the free shank ends (31; 32) of the spring clip (3) are provided with clamp stays (311; 321), which engage in corresponding clamp cogs (23, 24) on the cross-member (22). (Figures 1, 2).

4. A fastening according to claim 2 and/or 3, characterised in that the cross-member (22) is provided with notches, into which the clamp stays (311; 321) of the spring clip (3) engage in the sense of an axial position-fixing between the component part (2) or the cross-member (22), on the one hand, and the spring clip (3) on the other hand.

5. A fastening according to at least one of claims 1 to 4, characterised in that in the sense of a positive-locking position-fixing of the component part (2) or of the cross-member (22), relative to the motor housing (1), the cross-member (22) is provided with at least one radial fixing-cam (33) or a radial fixing-recess, corresponding to which on the motor housing (1) there is at least one corresponding radial fixingrecess (11) or a radial fixing-cam (figure 1).

6. A fastening according to at least one of claims 1 to 4, characterised in that in the sense of a positive-locking position-fixing of the component element (2) or of the cross-member (22) relative to the motor housing (1) the spring clip (3) is provided with at least one radial fixing-cam (34) or a fixing opening (35), corresponding to which on the motor housing (1) these is at least one corresponding radial fixing-recess (12) or a radial fixing-cam (13) (figures 3–6).

7. A fastening according to at least one of claims 1 to 6, characterised in that in the sense of a universal motor housing able to be used for various suspension positions the motor housing (1) is provided with several fixing-recesses or fixing-cams corresponding in number and position with the various layers of the cross-member (22).

8. A fastening according to at least one of claims 5 to 6, characterised in that the fixing-recesses or fixing-cams are pressed into or impressed on the surface of the motor housing and the fixing-cams or fixing-openings are pressed into or punched into the spring clip.

EP 0 307 707 B1

FIG 1

FIG 2

FIG 3

FIG 4

FIG 5

FIG 6